Europäisches Patentamt

European Patent Office

Office européen des brevets

(11) Numéro de publication: **0 539 295 B1**

## (12) FASCICULE DE BREVET EUROPEEN

(45) Date de publication de fascicule du brevet: **01.03.95**

(51) Int. Cl.6: **A01N 25/34**, A01N 25/18, A01K 13/00, A01K 27/00

(21) Numéro de dépôt: **92402886.3**

(22) Date de dépôt: **22.10.92**

(54) **Système pesticide.**

(30) Priorité: **24.10.91 US 782512**

(43) Date de publication de la demande: **28.04.93 Bulletin 93/17**

(45) Mention de la délivrance du brevet: **01.03.95 Bulletin 95/09**

(84) Etats contractants désignés: **AT BE CH DE DK ES FR GB GR IT LI LU NL PT SE**

(56) Documents cités:
| EP-A- 0 436 428 | FR-A- 2 117 185 |
| FR-A- 2 298 952 | US-A- 3 318 769 |
| US-A- 3 852 416 | US-A- 4 150 109 |

**Handbook of Chemistry and Physics,71st Edition,1991,page 3-398**

**Roempps Chemielexikon,1987, 0.A.Neumueller,page 3413**

(73) Titulaire: **ROUSSEL-UCLAF**
**35, Boulevard des Invalides**
**F-75007 Paris (FR)**

(72) Inventeur: **KELLEY, Donald W.**
**6205 Glenmoor**
**Garland,**
**Texas 75043 (US)**

(74) Mandataire: **Jacobi, Markus Alexander et al**
**Roussel Uclaf**
**111, Route de Noisy**
**B.P. 9**
**F-93230 Romainville (FR)**

Rank Xerox (UK) Business Services
(3.10/3.09/3.3.3)

## Description

### Arrière plan de l'invention

Les ingrédients actifs aux propriétés pesticides ont été et sont actuellement mélangés avec des polymères, comme le poly(chlorure de vinyle), puis moulés en des formes telles que bandes, colliers pour animaux et plaques auriculaires pour animaux, pour être utilisés pour lutter contre les nuisibles. Voir, par exemple, les brevets U.S. n° 3 318 769, 3 852 416 et 4 150 109. Un inconvénient majeur des mélanges de polymères et d'ingrédients actifs de l'art antérieur est qu'une quantité considérable de l'ingrédient actif n'est pas libérée par le mélange et est indisponible pour la lutte contre les nuisibles que l'on vise. Ce facteur réduit la rentabilité et la durée de vie utile du produit. Un autre inconvénient des mélanges de polymères et d'ingrédients actifs de l'art antérieur est que le taux de libération de l'ingrédient actif du mélange n'est pas uniforme, ce qui se traduit par une utilisation moins efficace de l'ingrédient actif. La présente invention surmonte les inconvénients précités des mélanges (systèmes) de l'art antérieur.

### Résumé de l'invention.

La demande concerne un système de libération contrôlée d'un ingrédient actif (IA), ou d'un mélange d'ingrédients actifs, pour lutter contre les parasites, à partir d'une matrice polymère qui soit plus efficace pour libérer l'ingrédient actif ou les ingrédients actifs que les systèmes (mélanges) de l'art antérieur. De plus les systèmes pesticides de la présente invention possèdent un taux uniforme de libération de l'ingrédient actif qui rend l'utilisation de l'ingrédient actif plus effective et efficace. Les systèmes emploient un polymère vinylique, comme le poly(chlorure de vinyle) (PVC), auquel on ajoute un plastifiant hautement miscible et du phosphate de triphényle (TPP) utilisé comme véhicule de l'ingrédient actif.

### Description détaillée de l'invention.

La présente invention a pour objet un système pesticide pour la libération contrôlée d'un ingrédient actif pesticide à partir d'une matrice polymère, qui comprend :
- un polymère vinylique,
- un plastifiant liquide miscible au dit polymère, ledit plastifiant étant présent en une quantité la plus grande possible pour que le mélange de plastifiant et de polymère soit toujours maintenu sec et fluide ; et
- du phosphate de triphényle, ledit phosphate de triphényle étant présent en une quantité suffisante pour servir de véhicule au dit ingrédient actif.

Dans un mode de réalisation préféré de la mise en oeuvre de la présente invention, le poly(chlorure de vinyle) ou un autre polymère vinylique, tel qu'un mélange sec de résine, est additionné à un ou à plusieurs plastifiants hautement miscibles comme d'adipate de dioctyle. La quantité de plastifiants que l'on utilise est la quantité maximale qui permet au mélange de rester sec et fluide. Séparément, l'ingrédient actif est mélangé avec le véhicule solide de l'ingrédient actif (phosphate de triphényle), à un taux prédéterminé, pour former le mélange véhicule-IA. Ce mélange est ensuite fondu et rendu homogène par un malaxage soigneux, refroidi pour donner un solide, qui est broyé en petites particules. Ensuite, le mélange de résine et le mélange d'ingrédient actif sont mélangés l'un à l'autre en proportions prédéterminées. Le mélange résultant est ensuite soumis à un malaxage à chaud et extrudé dans la forme physique voulue.

Aux températures auxquelles on opère, le mélange véhicule-IA a beaucoup moins d'affinité avec le polymère que le plastifiant, mais en a suffisamment aux températures élevées pour se disperser dans le mélange de polymère et de plastifiant à la manière d'une micro-émulsion. D'une manière non limitative, on pense que, lorsque le mélange total refroidit, le véhicule d'IA (TPP) devient incompatible avec le polymère, alors que le plastifiant demeure compatible avec le polymère. Lorsque le mélange véhicule-IA recristallise ou devient solide, la matrice polymère/plastifiant joue le rôle de régulateur de granulométrie en empêchant la structure cristalline du véhicule d'IA de grossir jusqu'à avoir une dimension qui l'immobiliserait au sein de la matrice. Au lieu de cela, les cristaux sont petits et peuvent se déplacer au sein de la matrice de polymère plastifiée et en sortir. Le mélange véhicule-IA se déplace vers la surface de la matrice polymère indépendamment des proportions véhicule d'IA/ingrédient actif, tant que la concentration d'ingrédient actif ne dépasse pas celle du véhicule d'IA ou tant que l'on n'utilise pas trop d'ingrédient actif liquide pouvant rendre le mélange final véhicule d'IA/ingrédient actif autre que solide. Ainsi, de faibles pourcentages d'un ingrédient actif peuvent être efficacement libérés à partir d'un taux élevé de véhicule d'IA par rapport à l'ingrédient actif. Cette propriété permet d'utiliser des ingrédients actifs coûteux dans des produits commercialement compétitifs avec ceux qui emploient un ingrédient actif d'un côut inférieur.

En incorporant au polymère de fortes proportions d'un plastifiant miscible, on rend le polymère incapable de se lier au mélange véhicule d'IA/ingrédient actif, ce qui laisse ce mélange libre de se déplacer au sein de la matrice polymère. Cela permet à l'ingrédient actif d'être effectivement libéré à des pourcentages bien plus élevés que lorsque rien n'empêche l'ingrédient actif de se lier au polymère.

Un autre avantage de l'association ingrédient actif/véhicule d'IA est que les doses irritantes d'ingrédient actif pour les animaux (peau) sont réduites. On pense que ceci est obtenu grâce à l'association physique du véhicule d'IA et de l'ingrédient actif. Lorsque le véhicule d'IA cristallise, il recouvre en partie ou en totalité l'ingrédient actif, ce qui le rend moins disponible pour la peau de l'animal. Cependant, du fait de l'effet régulateur de granulométrie du système de la présente invention, la granulométrie est suffisamment faible pour permettre d'obtenir l'efficacité contre les nuisibles visés. Un autre avantage de l'association TPP/ingrédient actif est que leur mélange présente une affinité pour le pelage de l'animal et que les cristaux ou les particules adhèrent ou collent au pelage de l'animal.

Dans les systèmes pesticides de la présente invention, on peut utiliser les polymères couramment employés dans les bandes, les colliers et les plaques auriculaires pesticides. Parmi ceux-ci, on peut citer les polymères et les copolymères de monomères vinyliques tels que le chlorure de vinyle, l'acétate de vinyle, les acrylates et analogues. Les polymères décrits dans les brevets U.S. 3 318 769 et 3 852 416, conviennent pour être utilisés dans la présente invention.

Le plastifiant miscible utilisé dans les systèmes pesticides de la présente invention sont des plastifiants liquides que l'on emploie couramment dans les systèmes pesticides polymères. Parmi ceux-ci, on peut citer les esters phtaliques, comme le phtalate de dioctyle, les esters adipiques comme l'adipate de dioctyle et analogues.

Dans les systèmes pesticides de la présente invention, la quantité de phosphate de triphényle utilisée pour servir de véhicule à l'ingrédient actif est comprise entre environ 10 et 35% en poids du système total.

Les systèmes pesticides de la présente invention peuvent employer un agent pesticide liquide ou bien solide, ou des combinaisons des deux. L'agent pesticide peut être un insecticide et/ou un acaricide. On peut incorporer un ou plusieurs agents pesticides, comme un pyréthrinoïde naturel ou synthétique, un carbamate, un phosphate, un phosphorothioate, etc. Par exemple, on peut citer la pyréthrine, l'alléthrine, la resméthrine, la deltaméthrine, la tralométhrine, le carbarylé, le propoxur, le dichlorvos, le naled, le diazinon et analogues.

Parmi les agents pesticides préférés, on peut citer les pyréthrinoïdes photostables et tout particulièrement la deltaméthrine et la tralométhrine.

Le terme "parasite", tel qu'il est employé ici, désigne les insectes et les arachnides.

Les exemples suivants illustrent l'invention.

### EXEMPLE 1 :

On fabrique des colliers pour chiens à partir de la formulation suivante (pourcentage pondéral), en utilisant le mode opératoire décrit ci-dessus.

```
- PVC (masse mol. moyenne) .....................    40,6
- Stabilisant (CZ19A) ..........................     0,4
- Huile époxydée ...............................     5,0
- Adipate de dioctyle ..........................    18,0
- Phosphate de triphényle ......................    32,0
- Poudre de tralométhrine * (63,5%) ............     4,0
* décrit dans le brevet français n° 2 364 884 EX. 1.
```

Des colliers mesurant environ 1 cm de largeur, environ 0,3 cm d'épaisseur et environ 50 cm de longueur sont fabriqués pour servir à l'évaluation de la mortalité des ectoparasites sur des chiens. Deux groupes de 3 chiens chacun sont logés individuellement dans des cages à sol de béton qui sont nettoyées quotidiennement. Trois chiens sont utilisés comme témoins non traités et trois chiens sont munis de colliers faits avec la formulation de l'exemple 1. La veille du jour où l'on met un collier aux trois chiens, on infecte chacun des six chiens en plaçant 100 puces adultes (Ctenocephalides felis), non nourries, sur la médiane dorsale de la tête à la base de la queue. Chaque chien est réinfecté sur une base hebdomadaire.

EP 0 539 295 B1

## TABLEAU 1

Nombre de puces comptées sur chaque chien aux jours indiqués

| N° id. chien | Jour 0 | 1 | 3 | 7 | 9 | 14 | 16* | 209 | 211 | 216 | 218 | 223 | 225 | 230 | 232 | 237 | 239 |
|---|---|---|---|---|---|---|---|---|---|---|---|---|---|---|---|---|---|
| **Témoin non traité** | | | | | | | | | | | | | | | | | |
| 1 | 40 | 41 | 45 | 39 | 35 | 40 | 39 | 55 | 50 | 57 | 55 | 49 | 46 | 57 | 54 | 36 | 39 |
| 2 | 33 | 30 | 31 | 52 | 57 | 49 | 48 | 30 | 29 | 36 | 37 | 27 | 24 | 39 | 44 | 51 | 45 |
| 3 | 25 | 26 | 21 | 47 | 45 | 51 | 53 | 24 | 28 | 19 | 20 | 16 | 15 | 31 | 32 | 24 | 25 |
| Moyenne | 32,7 | 32,3 | 32,3 | 46,0 | 45,7 | 46,7 | 46,7 | 36,3 | 35,7 | 37,3 | 37,3 | 30,7 | 28,3 | 42,3 | 43,3 | 37,0 | 36,3 |
| **Chiens avec colliers** | | | | | | | | | | | | | | | | | |
| 4 | 11 | 14 | 8 | 11 | 2 | 6 | 7 | 5 | 0 | 4 | 0 | 1 | 0 | 2 | 0 | 3 | 1 |
| 5 | 29 | 15 | 9 | 2 | 0 | 0 | 0 | 2 | 0 | 3 | 0 | 3 | 1 | 6 | 0 | 5 | 0 |
| 6 | 37 | 4 | 2 | 0 | 0 | 0 | 0 | 3 | 0 | 7 | 2 | 8 | 2 | 7 | 1 | 11 | 4 |
| Moyenne | 25,7 | 11,0 | 6,3 | 4,3 | 0,7 | 2,0 | 2,3 | 3,3 | 0,0 | 4,7 | 0,7 | 4,0 | 1,0 | 5,0 | 0,3 | 6,3 | 1,7 |
| Pourcentage réduction | | 66 | 80 | 91 | 98 | 96 | 95 | 91 | 100 | 87 | 98 | 87 | 96 | 88 | 99 | 83 | 95 |

* Aux jours 21 à 204, le pourcentage de réduction s'échelonne de 95% à 100%

**TABLEAU 1**
**(suite)**

Nombre de puces comptées sur chaque chien aux jours indiqués

| N° id. chien | Jour 248 | 250** | 252 | 254 | 256 | 258 | 260 | 262 | 264 | 266 | 268 | 270 |
|---|---|---|---|---|---|---|---|---|---|---|---|---|
| **Témoin non traité** | | | | | | | | | | | | |
| 1 | 51 | 46 | 24 | 31 | 39 | 43 | 32 | 29 | 47 | 42 | 28 | 34 |
| 2 | 31 | 29 | 62 | 67 | 42 | 40 | 58 | 55 | 26 | 30 | 22 | 25 |
| 3 | 38 | 40 | 47 | 44 | 69 | 67 | 34 | 39 | 51 | 52 | 43 | 46 |
| Moyenne | 40,0 | 38,3 | 44,3 | 47,3 | 50,0 | 50,0 | 41,3 | 41,0 | 41,3 | 41,3 | 31,0 | 35,0 |
| **Chiens avec colliers** | | | | | | | | | | | | |
| 4 | 10 | 2 | 7 | 3 | 12 | 5 | 12 | 4 | 8 | 5 | 20 | 9 |
| 5 | 4 | 3 | 4 | 1 | 8 | 2 | 6 | 2 | 9 | 1 | 11 | 5 |
| 6 | 16 | 4 | 13 | 9 | 14 | 5 | 10 | 8 | 15 | 5 | 13 | 7 |
| Moyenne | 10,0 | 3,0 | 8,0 | 4,3 | 11,3 | 4,0 | 9,3 | 4,7 | 10,7 | 4,7 | 14,7 | 7,0 |
| Pourcentage réduction | 75 | 92 | 82 | 91 | 77 | 92 | 77 | 89 | 74 | 91 | 53 | 80 |

** Collier retiré de chaque chien

Comme l'indique le tableau 1, les colliers sont retirés au jour 250. La mortalité des puces, très efficace, se poursuit néanmoins jusqu'au jour 270 (80% de réduction), date à laquelle l'essai est arrêté.

En opérant comme indiqué ci-dessus, on infecte 6 chiens en y plaçant des tiques.

Sur les 3 chiens munis de collier jusqu'au jour 250, on note une mortalité des tiques très efficace qui se poursuit jusqu'au jour 270 (83% de réduction), date à laquelle l'essai est arrêté.

## EXEMPLE 2 :

On prépare les formulations 2A, 2B et 2C suivantes et on s'en sert pour former des colliers pour chien en employant le mode opératoire de l'exemple 1 (pourcentage pondéral).

Formulation

| 2A | PVC (masse mol. moyenne) | 43,5 |
| | Stabilisant (Witco CZ19A) | 0,5 |
| | Huile époxydée | 5,0 |
| | Adipate de dioctyle | 18,0 |
| | TPP | 31,0 |
| | Poudre de tralométhrine (63,5%) | 2,0 |
| 2B | Identique à la formulation 2A, sauf que l'on utilise 30,3% de TPP et 2,7% de tralométhrine (TLM). | |
| 2C | Identique à la formulation 2A, sauf que l'on utilise 29,0% de TPP et 4,0% de TLM. | |

Trois groupes de chiens, de chiens chacun, sont munis de colliers faits à partir de la formulation 2A, de la formulation 2B et de la formulation 2C. Chaque chien d'un des groupes est muni de quatre colliers de formulation 2A, un deuxième groupe est muni de quatre colliers chacun de formulation 2B et le troisième groupe est muni de quatre colliers chacun de formulation 2C. L'un des colliers est retiré au hasard sur chaque chien aux jours 7, 14, 21 et 28 et analysé, ce qui permet de déterminer le pourcentage de variation de la quantité de TLM et de TPP dans le collier au jour indiqué. Le pourcentage de variation, en poids, d'après l'analyse, est indiqué par la courbe I pour la TLM et par la courbe II pour le TPP. Le code du collier utilisé dans les courbes est __.__ pour la formulation 2A, -¦- pour la formulation 2B et -*- pour la formulation 2C.

## Courbe I

## Courbe II

Comme l'indique la libération pratiquement linéaire de la TLM et du TPP, on obtient une utilisation plus efficace de l'ingrédient actif (TLM). Cela contraste fortement avec les systèmes (mélanges) de libération de l'art antérieur, qui donnent un taux de libération incurvé en forme de cloche de l'ingrédient actif et, par conséquent, une utilisation inefficace de l'ingrédient actif. Du fait du taux linéaire de libération de l'ingrédient actif que permettent d'obtenir les systèmes de la présente invention, il est possible de délivrer une dose prédéterminée d'ingrédient actif sur une base quotidienne, sur une durée prolongée.

## EXEMPLE 3 :

On peut utiliser les formulations suivantes pour des plaques auriculaires de bovins, afin de lutter très efficacement contre les hématobies (pourcentage pondéral).

|  | A | B |
|---|---|---|
| TPP | 25,0 | 25,0 |
| TLM | 4,0 | 1,6 |
| PVC (masse mol. élevée | 47,5 | 49,9 |
| Stabilisant (CZ19A) | 0,5 | 0,5 |
| Huile époxydée | 5,0 | 5,0 |
| Adipate de dioctyle | 18,0 | 18,0 |

**EXEMPLE 4 :**

On prépare la formulation suivante destinée à des colliers pour chiens (pourcentage pondéral).

```
PVC (masse mol. moyenne) ...................   40,50

Stabilisant (Witco CZ19A) .................    0,50

Huile de soja époxydée ....................    5,00

Adipate de diisooctyle ....................   18,00

TPP .......................................   31,45

Deltaméthrine * 98,4% .....................    3,05

PMS 355T ..................................    1,50

* décrit dans Nature Vol 248 (19.04.74) p. 710-711 Tech.
```

On mélange la formulation en chargeant le PVC, le stabilisant, l'EPO et le DIOA dans un mélangeur à ruban, en chauffant au voisinage de 80°C et en mélangeant jusqu'à l'obtention d'un mélange sec et fluide. On ajoute le TPP et on mélange jusqu'à l'uniformité. On ajoute ensuite uniformément la deltaméthrine et on mélange jusqu'à obtention à un mélange sec et fluide. On arrête le chauffage et, après refroidissement, on ajoute le pigment. Le lot est extrudé au voisinage de 160°C pour donner des colliers. On pense que, dans ce mode opératoire, la température du mélange provoque efficacement le mélange de l'IA (deltaméthrine) et du TPP.

**Revendications**

1. Un système pesticide pour la libération contrôlée d'un ingrédient actif à partir d'une matrice polymère, qui comprend:
   - un ou plusieurs pyréthrinoïdes naturels ou synthétiques,
   - un polymère vinylique,
   - un plastifiant liquide miscible au dit polymère, ledit plastifiant étant présent en une quantité la plus grande possible pour que le mélange de plastifiant et de polymère soit toujours maintenu sec et fluide, et
   - du phosphate de triphényle dans une quantité de 10 à 35% en poids du système total.

2. Un système selon la revendication 1, dans lequel le polymère est un polymère ou un copolymère de chlorure de vinyle.

3. Un système selon la revendication 1 ou 2, dans lequel le plastifiant liquide est un ester adipique ou un ester phtalique.

4. Un système pesticide selon la revendication 1,2 ou 3, dans lequel l'agent pesticide est choisi dans le groupe consti tué de la pyréthrine, l'alléthrine, la resméthrine, la deltaméthrine et la tralométhrine.

5. Un système pesticide selon la revendication 1,2,3 ou 4, dans lequel l'agent pesticide est un pyréthinoïde photostable.

6. Un système pesticide selon la revendication 1,2,3,4 ou 5, dans lequel l'agent pesticide est la deltaméthrine.

7. Un système pesticide selon la revendication 1,2,3,4 ou 5 dans lequel l'agent pesticide est la tralométhrine.

**Claims**

1. A pesticidal system for the controlled release of an active ingredient starting with a polymer matrix, which contains:
   - one or more natural or synthetic pyrethrinoids,
   - a vinyl polymer,
   - a liquid plasticizer miscible with the said polymer, the said plasticizer being present in as large a quantity as possible so that the mixture of plasticizer and polymer is always kept dry and fluid, and
   - triphenyl phosphate in a quantity of 10 to 35% by weight of the total system.

2. A system according to claim 1, in which the polymer is a polymer or a copolymer of vinyl chloride.

3. A system according to claim 1 or 2, in which the liquid plasticizer is an adipic ester or a phthalic ester.

4. A pesticidal system according to claim 1, 2 or 3, in which the pesticidal agent is chosen from the group constituted by pyrethrin, allethrin, resmethrin, deltamethrin and tralomethrin.

5. A pesticidal system according to claim 1, 2, 3 or 4, in which the pesticidal agent is a photostable pyrethrinoid.

6. A pesticidal system according to claim 1, 2, 3, 4 or 5, in which the pesticidal agent is deltamethrin.

7. A pesticidal system according to claim 1, 2, 3, 4 or 5, in which the pesticidal agent is tralomethrin.

**Patentansprüche**

1. Pestizides System für die kontrollierte Freisetzung eines Wirkstoffes aus einer Polymer-Matrix, die umfaßt:
   - ein oder mehrere natürliche oder synthetische Pyrethrinoide,
   - ein Vinylpolymer,
   - einen flüssigen, mit dem genannten Polymer mischbaren Weichmacher, wobei dieser Weichmacher in einer so groß als möglichen Menge anwesend ist, damit die Mischung von Weichmacher und Polymer immer trocken und fluid gehalten wird, und
   - Triphenylphosphat in einer Menge von 10 bis 35 Gewichtsprozent des Gesamtsystems.

2. System nach Anspruch 1, bei dem das Polymer ein Polymer oder ein Copolymer von Vinylchlorid ist.

3. System nach Anspruch 1 oder 2, bei dem der flüssige Weichmacher ein Adipinsäureester oder ein Phthalsäureester ist.

4. Pestizides System nach Anspruch 1, 2 oder 3, bei dem das pestizide Mittel aus der Gruppe gewählt wird, die besteht aus: Pyrethrin, Allethrin, Resmethrin, Deltamethrin und Tralomethrin.

5. Pestizides System nach Anspruch 1, 2, 3 oder 4, bei dem das pestizide Mittel ein photostabiles Pyrethrinoid ist.

6. Pestizides System nach Anspruch 1, 2, 3, 4 oder 5, bei dem das pestizide Mittel Deltamethrin ist.

7. Pestizides System nach Anspruch 1, 2, 3, 4 oder 5, bei dem das pestizide Mittel Tralomethrin ist.